## Europäisches Patentamt

## European Patent Office

## Office européen des brevets

(19)

(11) EP 1 229 741 A2

(12) **EUROPÄISCHE PATENTANMELDUNG**

(43) Veröffentlichungstag:
07.08.2002 Patentblatt 2002/32

(51) Int Cl.$^7$: **H04N 7/26**, H04N 5/14,
G06T 7/20

(21) Anmeldenummer: 02090036.1

(22) Anmeldetag: 25.01.2002

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **31.01.2001 DE 10105423**

(71) Anmelder: **Heinrich-Hertz-Institut
für Nachrichtentechnik Berlin GmbH
10587 Berlin (DE)**

(72) Erfinder:
• **Brandenburg, Nicole
12359 Berlin (DE)**

• **Karl, Michael
10245 Berlin (DE)**
• **Kauff, Peter
10711 Berlin (DE)**
• **Schreer, Oliver
10823 Berlin (DE)**

(74) Vertreter: **Rudolph, Margit et al
Heinrich-Hertz-Institut für Nachrichtentechnik
Berlin GmbH,
Einsteinufer 37
10587 Berlin (DE)**

(54) **Verfahren zur Korrespondenzanalyse von Bildmerkmalen in korrespondierenden
Videobildern in Echtzeit**

(57) Um realistische dreidimensionale Videoobjekte zu erhalten, wird eine Szene durch ein Stereokamerasystem aufgenommen und deren Videobilder einer Disparitätsanalyse unterzogen. Diese ermittelt für jeden Pixel die Verschiebung zwischen einzelnen Bildmerkmalen und ermöglicht die Berechnung von Bewegungsparallaxe beim Betrachter. Dabei entspricht die Größe der Verschiebung der Raumtiefe. Bekannte Verfahren schränken die möglichen Stereogeometrien jedoch stark ein. Ein Einsatz insbesondere in virtuellen Videokonferenzen mit hoher Telepräsenz ist nicht möglich. Für die Bewegungsschätzung als Korrespondenzanalyse zwischen zeitlich aufeinander folgenden Videobildern ist das schnelle und einfache Hybridrekursiverfahren bekannt, das die Vorteile von Blockrekursion (BRC) und Pixelrekursion (PRC) vereint. Bei dem auf diesem Verfahren basierenden erfindungsgemäßen Verfahren, das für beliebige Stereogeometrien geeignet ist, ist vorgesehen, dass die Eingangsbilddaten (ID) für die Blockrekursion (BRC) auf dem linken und dem rechten Videobild (V1, V2) eines Stereobildpaares (SP) basieren und in die Pixelrekursion (PRC) die Parameter der Stereogeometrie (PSG) zur Erfüllung der Epipolarbedingung einfließen. Verwendung findet das erfindungsgemäße Verfahren bei allen räumlichen Darstellungen ohne weitere Hilfsmittel mit Bewegungsparallaxe.

Fig.1

EP 1 229 741 A2

## Beschreibung

Die Erfindung bezieht sich auf ein Verfahren zur Korrespondenzanalyse von Bildmerkmalen in korrespondierenden Videobildern in Echtzeit, das zur Bestimmung eines Korrespondenzvektorfeldes von den digitalen Eingangsbilddaten unter Einbeziehung ausgewählter Optimierungskriterien ausgeht und auf dem Hybridrekursionsverfahren basiert, das zur Ermittlung eines korrigierten Blockvektors als Korrespondenzvektor des jeweils aktuellen Pixels eine Blockrekursion mit einer integrierten Pixelrekursion zur Blockvektorkorrektur umfasst.

Mit einem Verfahren zur Korrespondenzanalyse werden Ähnlichkeitsbetrachtungen zwischen Bildmerkmalen in korrespondierenden Videobildern durchgeführt. Die daraus gewonnenen Erkenntnisse können für Formatkonversionen und Datenkompressionen genutzt werden. Wird die Bewegung als Korrespondenz zwischen Videobildern in Videobildsequenzen, die über eine zeitliche Abfolge miteinander korrespondieren, gewählt, kann eine Bewegungsschätzung durchgeführt werden. Dazu sind mehrere Methoden entwickelt worden. Innerhalb der entwickelten Verfahren kann zwischen zwei verschiedenen Ansätzen unterschieden werden : dem rekursiven Block-Matching-Ansatz (vergleiche **[1]**) und Algorithmen, die auf dem optischen Fluss basieren (vergleiche **[2]**). Der rekursive Block-Matching-Ansatz liefert ein nicht-dichtes Bewegungsvektorfeld auf Blockbasis unter Anwendung einer geeigneten Gütefunktion als Optimierungskriterium. In **[1]** wird bereits das Konzept der Verwendung von wenigen Kandidatenvektoren erläutert, um eine rechenaufwändige Suche in einem definierten Bereich zu vermeiden. Der optische Fluss-Ansatz hingegen nutzt die Kontinuität zwischen örtlichen Gradienten und zwischen Differenzen der Intensitäten korrespondierender Pixel in zwei Videobildern aus und liefert ein dichtes Bewegungsvektorfeld. Um dieses Verfahren jedoch in schwach strukturierten Bereichen zuverlässig zu gestalten, werden hierarchische Konzepte angewendet, die auf Auflösungspyramiden beruhen. Dadurch entsteht auch bei einem solchen pixelrekursiven Konzept ein beträchtlicher Rechenaufwand, der für eine Echtzeit-Realisierung von Nachteil ist.

Das erfindungsgemäße Verfahren basiert auf dem schnellen Hybridrekursionsverfahren gemäß der **DE-A1 197 44 134.** Das hier beschriebene Verfahren dient zur Bewegungsschätzung zwischen zeitlich aufeinander folgenden Videobildern und hat zur Grundidee, effizient eine kleine Gruppe von relevanten Kandidatenvektoren auszuwählen, um den Rechenaufwand zur Konsistenzerreichung im Bewegungsvektorfeld als Korrespondenzvektorfeld zu minimieren. Das bekannte Verfahren vereinigt die Vorteile des blockrekursiven Matchings mit denen des pixelrekursiven optischen Fluss-Verfahrens und führt so zu einer sehr genauen Bewegungsschätzung bei einem relativ geringen Rechenaufwand. Für jeden aktuellen Block wird in mehreren Abschnitten ein optimierter Blockvektor als Bewegungsvektor generiert. Zuerst wird mittels Blockrekursion ein Blockvektor aus mehreren Kandidatenvektoren nach dem vorgegebenen Optimierungskriterium der Differenz verschobener Blöcke (DBD Displaced Block Difference) ausgewählt. Danach wird dieser Blockvektor mittels Pixelrekursion nach dem Optimierungskriterium der Differenz verschobener Pixel (DPD Displaced Pixel Difference) aktualisiert. Abschließend wird dann nach dem vorgegebenen Optimierungskriterium zwischen beiden Blockvektoren entschieden. Das bekannte Verfahren stellt eine Zusammenführung zweier unterschiedlicher Rekursionsverfahren mit unterschiedlichen Ansätzen und Vorteilen dar, woraus sich die Bezeichnung "Hybridrekursionsverfahren" ergibt. Es beschränkt sich auf einfach und übersichtlich durchzuführende Maßnahmen für wenige Kandidatenvektoren, indem schon bei deren Vorauswahl bereits vorhandene qualifizierte Ergebnisse als Eingangsgrößen verwendet werden und die jeweils entstehenden Zwischenresultate einer Prüfung gemäß den Optimierungskriterien unterliegen. Da das bekannte Verfahren der Bewegungsschätzung dient, werden zeitlich aufeinander folgende Videobilder als Eingangsbilddaten verwendet. In dem Verfahren gemäß der **DE-A1 197 44 134** werden Videohalbbilder von drei direkt aufeinander folgenden Zeitpunkten verwendet, die von einer einzelnen Kamera aufgenommen werden.

Um realistische dreidimensionale Videoobjekte zu erzeugen, beispielsweise von Konferenzteilnehmern in einer virtuellen Videokonferenz mit hoher Telepräsenz, müssen diese mittels eines Mehrkamerasystems aufgenommen werden. In solchen zukünftigen Videokonferenzanwendungen ist eine perspektivrichtige Darstellung der einzelnen Teilnehmer erforderlich, um die wichtige Bewegungsparallaxe beim Betrachter zu erzeugen. Bewegt dieser seinen Kopf seitwärts, muss er bei einer realistischen Darstellung unterschiedliche Ansichten seiner Konferenzpartner wahrnehmen können. Die Kopfbewegungen des Beobachters werden dabei über entsprechende Headtrackingsysteme detektiert. Die geforderte dreidimensionale Beschreibung der räumlichen Videoobjekte wird möglich, wenn zwischen den Bildmerkmalen zwischen zwei Videobildern eines Stereobildpaares, das von zwei Kameras eines Mehrkamerasystems zeitgleich aufgenommen wurde, eine Korrespondenz hergestellt wird. Die entsprechende Analyse wird als Disparitätsanalyse bezeichnet und liefert analog zur Bewegungsschätzung zwischen zeitlich aufeinander folgenden Videobildern den Disparitätsvektor als Korrespondenzvektor, der die örtliche Verschiebung von Bildmerkmalen in Stereobildern beschreibt. Das Korrespondenzvektorfeld wird also von einem Disparitätsvektorfeld gebildet. Die virtuellen Ansichten können dann, basierend auf den ermittelten Disparitätsvektorfeldern, mittels aktueller Image-Rendering-Techniken erzeugt werden. Die Disparitätsanalyse ermittelt für jedes Pixel eines Videobildes eines Stereobildpaares die Verschiebung relativ zum anderen Videobild. Dabei entspricht die Größe der Verschiebung in umgekehrter Proportionalität der Tiefe des korrespondierenden 3D-Punktes im Raum. Verschiedene Disparitätsanalyse-Ansätze wurden in Zusammenhang mit Stereo-Anwendungen bereits vorgeschlagen. Sie stellen konsequente Weiterentwicklungen der oben mit den Veröffentlichungen **[1]** und **[2]** aufgezeigten Ansätze dar.

So wird in einer Veröffentlichung (vergleiche **[3])** ein auf dem Block-Matching-Ansatz beruhendes Stereo-Echtzeitsystem vorgestellt, das auf parallel rechnenden Signalprozessoren eine Korrespondenzsuche auf mehreren Auflösungspyramiden berechnet. Durch Vergleich der Ergebnisse kann die Zuverlässigkeit der Disparitätsschätzung wesentlich erhöht werden. Gleichzeitig kann die Fehlerfortpflanzung vermieden werden, die in einem streng hierarchischen Ansatz als Fehlerquelle auftritt. In einer anderen Veröffentlichung (vergleiche **[4]**) wird das Konzept der Kandidatenvektoren vorgestellt, wobei eine zweistufige Block-Matching-Rekursion Anwendung findet. Diese beschriebenen Echtzeit-Verfahren beruhen auf einem reinen Block-Matching-Ansatz und zeigen daher nicht die bedeutenden Vorteile des oben beschriebenen Hybridrekursionsverfahrens für Bewegungsschätzung. Außerdem wurden sie für eine vereinfachte Stereogeometrie des Kamerasystems, dem achsparallelen oder schwach konvergenten Aufbau, optimiert. In immersiven Videokonferenzsystemen können jedoch aufgrund der Größe des Displays und der Nähe des aufzunehmenden Objektes zum Display solche Kamerakonfigurationen nicht verwendet werden. Die Stereokameras müssen hier stark konvergent ausgerichtet sein, um die gesamte Szene erfassen zu können. Außerdem ist für eine Anwendung in einem Echtzeitsystem eine besonders schnelle Bestimmung der Disparitätsvektorfelder erforderlich, wie sie von dem beschriebenen Hybridrekursionsverfahren für die Bewegungsschätzung bekannt ist.

Ausgehend von dem Hybridrekursionsverfahren zur Korrespondenz zwischen Bildmerkmalen in korrespondierenden Videobildern, wie es in der **DE-A1 197 44 134** mit dem Bewegungsvektorfeld als Korrespondenzvektorfeld für bewegte Bildmerkmale in zeitlich aufeinander folgenden Videobildern beschrieben wird, und vor dem Hintergrund der Möglichkeiten der bekannten Verfahren für die Disparitätsanalyse zwischen zwei Videobildern eines Stereobildpaares ergibt sich damit für die Erfindung die **Aufgabe,** das zugrundeliegende Hybridrekursionsverfahren so zu modifizieren, dass es als Disparitätsanalyseverfahren zur dreidimensionalen Beschreibung von räumlichen Videoobjekten in beliebigen Stereoansichten eingesetzt werden kann. Darüber hinaus soll es bei beliebigen Stereogeometrien des eingesetzten Kamerasystems zuverlässig und schnell arbeiten.

Als **Lösung** für diese Aufgabe ist bei dem erfindungsgemäßen Verfahren eine Weiterbildung des bekannten Hybridrekursionsverfahrens in der Form vorgesehen, dass zur Ermittlung eines Disparitätsvektorfeldes als Korrespondenzvektorfeld die Eingangsbilddaten auf Basis der beiden Videobilder eines Stereobildpaares generiert werden, das mittels eines Mehrkamerasystems mit beliebiger Stereogeometrie erzeugt wird, wobei die Bildmerkmale in den beiden Videobildern des Stereobildpaares über eine Ortsverschiebung abhängig von der Tiefe des zugehörigen Bildmerkmals im Raum miteinander korrespondieren, und dass in die Blockvektorkorrektur die Parameter der Stereogeometrie zur Erfüllung der Epipolarbedingung für eine Anbindung des korrigierten Blockvektors an die jeweilige Epipolarlinie der Stereogeometrie einbezogen sind.

Mit dem erfindungsgemäßen Verfahren wird die Ähnlichkeit zwischen Bildmerkmalen zweier Videobilder berechnet, die von zwei beliebig zueinander orientierten Kameras eines Stereosystems aufgenommen werden. Der Vektor, der die Verschiebung des Bildmerkmals in dem einen Videobild zur Position des ähnlichsten Bildmerkmals im anderen Videobild darstellt, wird als Disparitätsvektor definiert. Das erfindungsgemäße Verfahren ermöglicht die schnelle Bestimmung von Disparitätsvektorfeldern für beliebige Stereogeometrien der verwendeten Kamerasysteme. Die damit aufgenommenen Videoobjekte können dreidimensional beschrieben werden. Die ermittelten virtuellen Ansichten können dann, basierend auf den Disparitätsvektorfeldern, mittels aktueller Image-Rendering-Techniken erzeugt werden. Dadurch ist eine besonders realistische Darstellung der Räumlichkeit des aufgenommenen Videoobjekts unter Erzeugung von Bewegungsparallaxe beim Betrachter möglich. Dieser erhält nun ohne zusätzliche Betrachtungshilfsmittel und ohne Verwendung besonderer Displays einen besonders realistischen Eindruck des Videoobjekts in Echtzeit. Insbesondere in den zunehmend an Bedeutung gewinnenden Videokonferenzen ist damit eine vollständige Einbindung der Teilnehmer möglich, die die zuweilen doch als störend empfundene Abbildungstechnik vollständig in den Hintergrund treten lässt. Auch treten keine Störungen durch zeitverzögerte Bearbeitungen auf, da das Verfahren auf rein rechnerischem Wege in Echtzeit mit 40 ms/frame bei einer ausreichenden Genauigkeit der Disparitätsvektorfelder arbeitet. Es ist damit auch für aktuelle digitale Videostandards, beispielsweise progressives CCIR601, einsetzbar. Zur Erhöhung der Zuverlässigkeit der Disparitätsanalyse ist eine Konsistenzprüfung zwischen den beiden Disparitätsvektorfeldern (von links nach rechts und von rechts nach links) sinnvoll und besonders effektiv. Im optimalen Fall muss die Summe der beiden Disparitätsvektoren zwischen korrespondierenden Bildpunkten Null sein.

Das erfindungsgemäße Verfahren basiert auf der Idee, örtlich benachbarte Kandidatenvektoren als Eingabe für die blockrekursive Disparitätsschätzung zu verwenden. Dabei wird von der Annahme ausgegangen, dass mit großer Wahrscheinlichkeit einer dieser Kandidatenvektoren eine sehr gute Approximation der Disparität an der aktuellen Pixelposition darstellt. Neben einer beträchtlichen Verringerung der Rechenzeit führt diese Methode zu örtlich konsistenten Disparitätsvektorfeldern. Da aber auch zeitliche Diskontinuitäten in den Disparitätssequenzen auftreten können, die bei einer Synthese basierend auf den Disparitätsvektorfeldern zu sichtbaren und damit äußerst störenden Artefakten führen können, wird außerdem ein zeitlicher Kandidat aus der Disparitätsanalyse des vorangegangenen Stereobildpaares verwendet. Als Modifikation des bekannten Hybridrekursiverfahrens mit einem blockrekursiven Teil, der den pixelrekursiven Teil zur Nachkorrektur des gesuchten Disparitätsvektors enthält, zeigt das erfindungsgemäße Verfahren jedoch auch wesentliche Unterschiede und Erweiterungen dazu. Die Basis für die Eingangsbilddaten bilden nun das rechte und das linke Videobild eines Stereobildpaares, die von einer Stereokamera aufgenommen wurden. Am Eingang liegen also korrespondierende Bilder von demselben Zeitpunkt vor. Die Korrespondenz zwischen den Videobildern bei dem erfindungsgemäßen Verfahren ergibt sich aus der Abbildung eines 3D-Raumpunktes an unterschiedliche Positionen in der Bildebene zweier Kameras einer Stereokamera, die beide unterschiedliche Blickwinkel haben. Dabei gewährleistet das Vorsehen mehrerer Stereokameras in einem Mehrkamerasystem eine Erweiterung der Bewegungsparallaxe. Die örtliche Verschiebung zwischen korrespondierenden Bildmerkmalen ist damit ein Maß für die Tiefe des entsprechenden 3D-Punktes des analysierten Objekts. Deshalb entspricht der mit dem erfindungsgemäßen Verfahren ermittelbare Disparitätsvektor dieser örtlichen Verschiebung des jeweilig aktuellen Blockes. Im pixelrekursiven Teil wird zudem eine Erweiterung eingeführt, die sich aus der Stereogeometrie des Kamerasystems ergibt. Da die Pixelrekursion im Allgemeinen keine der Stereogeometrie entsprechenden Vektoren liefert, werden hier die ermittelten Disparitätsvektoren in korrespondierende Vektoren entlang der Epipolarlinie der jeweiligen Stereogeometrie überführt (sogenanntes "Clamping").

In der Blockrekursion wird zunächst für jeden von drei Kandidatenvektoren ein Wert entsprechend dem geeignet gewählten Optimierungskriterium bestimmt. Gemäß diesem Optimierungswert wird der beste Kandidatenvektor für den aktuellen Pixel ausgewählt und der Pixelrekursion zugeführt. Hier wird unter Verwendung der optischen Fluss-Gleichung innerhalb einer Umgebung um den aktuellen Pixel an verschiedenen Orten innerhalb des aktuellen Blockes jeweils ein pixelrekursiver Prozess durchgeführt, um aktualisierte Vektorkandidaten zu bestimmen. Dabei wird unter Berechnung des örtlichen und zeitlichen Gradienten ein Update-Vektor mit im allgemeinen Fall horizontaler und vertikaler Komponente bestimmt, der zunächst zu einem aktualisierten Blockvektor aus der Eingangsphase und im weiteren Verlauf der Pixelrekursion zu einem aktualisierten Disparitätsvektor aus dem vorangegangenen Rekursionsschritt führt. Während dieser verschiedenen pixelrekursiven Prozesse wird in jedem Rekursionsschritt ein Offset-Vektor ermittelt, der zu einem neuen Update-Vektor führt. Die Entscheidung für den optimalen Update-Vektor wird mittels der Differenz verschobener Pixel DPD (Displaced Pixel Difference) herbeigeführt und der Update-Vektor mit der geringsten Differenz ausgewählt. Da dieser Update-Vektor nicht unbedingt die Epipolarbedingung der Stereogeometrie erfüllt, wird an dieser Stelle das Clamping durchgeführt. Dabei wird unter Verwendung der Parameter der Stereogeometrie der zum ausgewählten Update-Vektor nächstliegende Disparitätsvektor bestimmt, der die Epipolarbedingung erfüllt. Diese besagt, dass für ein Pixel in dem einen Videobild, das die Abbildung eines Punktes im Raum ist, das korrespondierende Pixel in dem anderen Videobild auf der Epipolarlinie der Stereogeometrie liegen muss und umgekehrt. Der korrigierte Disparitätsvektor wird dann an den blockrekursiven Teil zurückgegeben. Dort wird der korrigierte Kandidatenvektor aus der Pixelrekursion mit dem besten Kandidatenvektoren aus der Eingangsphase der Blockrekursion abschließend verglichen, wobei hier wieder das gewählte Optimierungskriterium verwendet wird. Der beste Kandidatenvektor ist dann der Blockvektor der aktuellen Blockposition und wird gleichzeitig für die nächste Blockrekursion abgespeichert.

Dem erfindungsgemäßen Verfahren werden Eingangsbilddaten zur Verarbeitung zugeführt, die auf den beiden Bildern eines Stereokamerasystems beruhen. Dabei kann dieser Zusammenhang direkt gegeben sein, das heißt, das direkt die aufgenommenen Stereobilder digitalisiert werden. Es kann nach einer Fortführung des erfindungsgemäßen Verfahrens jedoch auch der Fall sein, dass die Eingangsbilddaten als transformierte Äquivalente aus den beiden Videobildern eines Stereobildpaares generiert werden. Hierbei kann nach einer nächsten Erfindungsfortführung vorgesehen sein, dass die transformierten Äquivalente durch Rektifikation der einzelnen Stereobilder generiert werden. Bei der Rektifikation werden aus konvergenten Videobildern durch Anwendung einer zweidimensionalen Transformation achsparallele Ansichten erzeugt. Die beiden Stereobilder können auch jeder anderen im Sinne der Aufgabenstellung geeigneten Transformation unterzogen werden. Des Weiteren müssen die von einem Stereobildpaar ausgehenden, transformierten Eingangsbilddaten für die Blockrekursion und die Pixelrekursion nicht identisch sein. Bei getrennten Datenflüssen können gemäß einer anderen Ausgestaltung der Erfindung in der Blockrekursion und in der integrierten Pixelrekursion unterschiedlich transformierte Äquivalente eines Stereobildpaares als Eingangsbilddaten bearbeitet werden. Über einen zusätzlichen Eingang werden deshalb die Parameter der jeweiligen Stereogeometrie der Pixelrekursion zugeführt. Werden transformierte Äquivalente als Eingangsbildsignale verwendet, muss das Optimierungskriterium in der Blockrekursion entsprechend ausgewählt werden. Es existieren unterschiedliche Selektions- und Ähnlichkeitskriterien. Vorteilhaft ist es gemäß einer anderen Ausgestaltung des erfindungsgemäßen Verfahrens, wenn in der Blockrekursion als Optimierungskriterium die Differenz verschobener Blöcke DBD (Displaced Block Difference) und in der Pixelrekursion die Differenz verschobener Pixel DPD (Displaced Pixel Difference) gewählt ist.

Die Kandidatenvektoren in der Block- und Pixelrekursion des erfindungsgemäßen Verfahrens sind in der zweidimensionalen Bildebene im Falle einer beliebigen Stereogeometrie des Kamerasystems ebenfalls zweidimensionale Vektoren. Wie bereits erläutert, müssen korrespondierende Merkmale in beiden Videobildern auf der durch die jeweilige Stereogeometrie bedingten Epipolarlinie liegen, um die Epipolarbedingung zu erfüllen. Damit beschränkt sich die Suche nach geeigneten Vektorkandidaten im Prinzip auf einen eindimensionalen Suchraum. Diese Tatsache kann durch eine geeignete Parametrisierung der Epipolarlinie ausgenutzt werden. Nach einer anderen Erfindungsfortführung ist es deshalb vorteilhaft, wenn die Ermittlung des Disparitätsvektors des jeweils aktuellen Pixels durch eine Parametrisierung der Epipolarlinien der Stereogeometrie auf einen eindimensionalen Suchraum beschränkt ist. Eine derartige Parametrisierung ist aus dem Stand der Technik zwar bereits bekannt, allerdings im Zusammenhang mit einem komplexen Gütefunktional zur Disparitätsschätzung (vergleiche [5]). Eine Anwendung dieser Parametrisierung innerhalb des hybriden block- und pixelrekursiven Disparitätsanalyseverfahrens ist jedoch nicht bekannt. Für das erfindungsgemäße Verfahren bedeutet diese Parametrisierung, dass die Kandidatenvektoren sowohl im block- als auch im pixelrekursiven Teil nur durch eine Komponente $\lambda$ beschrieben werden können. Die Suche nach dem besten Kandidatenvektor im pixelrekursiven Teil erfolgt dann nur noch entlang des Parameters $\lambda$. Für die Berechnung des Optimierungswertes und der Differenz verschobener Pixel DPD (Displaced Pixel Difference) ist dann jeweils eine inverse Berechnung notwendig, um aus dem $\lambda$-Parameter die entsprechenden zweidimensionalen Koordinaten zurückzurechnen. Dies geschieht jedoch innerhalb des Rechenmoduls und entspricht nur einer Koordinatentransformation.

Eine weitere Verringerung des zu analysierenden Bereiches in den Videobildern und damit eine wesentliche Beschleunigung des Rechenverfahrens ergibt sich, wenn nach einer anderen Ausgestaltung des erfindungsgemäßen Verfahrens die Disparitätsanalyse auf die begrenzte Pixelanzahl eines geschlossenen Videoobjekts beschränkt ist. Besonders im bereits erwähnten Videokonferenz-Szenario kann die Disparitätsanalyse auf den Konferenzteilnehmer, insbesondere auf dessen Kopf und Oberkörper, beschränkt werden, da nur dieser übertragen und in die virtuelle Szene eingefügt wird.

Um keine ortsabhängigen Ergebnisse zu erhalten, ist es nach einer weiteren Erfindungsfortführung sinnvoll, dass die einzelnen Blöcke in der Blockrekursion richtungsunabhängig bearbeitet werden. Insbesondere kann hierbei dreifach alternierend vorgegangen werden in der Form, dass die Blöcke zuerst für alle ungeraden oder geraden Bildzeilen bearbeitet werden und in aufeinander folgenden Bildzeilen die Bearbeitungsrichtung wechselt und in aufeinander folgenden Stereobildpaaren die Blockrekursion abwechselnd in der obersten oder untersten Bildzeile startet. Dieses Mehrfach-Mäander-Schema führt zu einer weitgehend richtungsunabhängigen Abarbeitung der Blockpositionen, da bei Kumulation aller Maßnahmen zu einem Dreifach-Mäander mindestens nach zwei Bildern alle Positionen um den aktuellen Pixel herum als Vektorkandidaten gewählt wurden. Eine Verbesserung der Verarbeitungseffizienz kann erreicht werden, wenn gemäß einer nächsten Erfindungsausgestaltung eine rein horizontale oder rein vertikale Verarbeitung durchgeführt wird.

Nachfolgend wird die Erfindung anhand der schematischen Figuren noch näher erläutert. Dabei zeigt:

**Figur 1**      ein Blockdiagramm des erfindungsgemäßen Verfahrens,
**Figur 2**      eine Darstellung der Epipolargeometrie und
**Figur 3**      ein Mehrfach-Mäander für die richtungsunabhängige Bearbeitung der einzelnen Pixel.

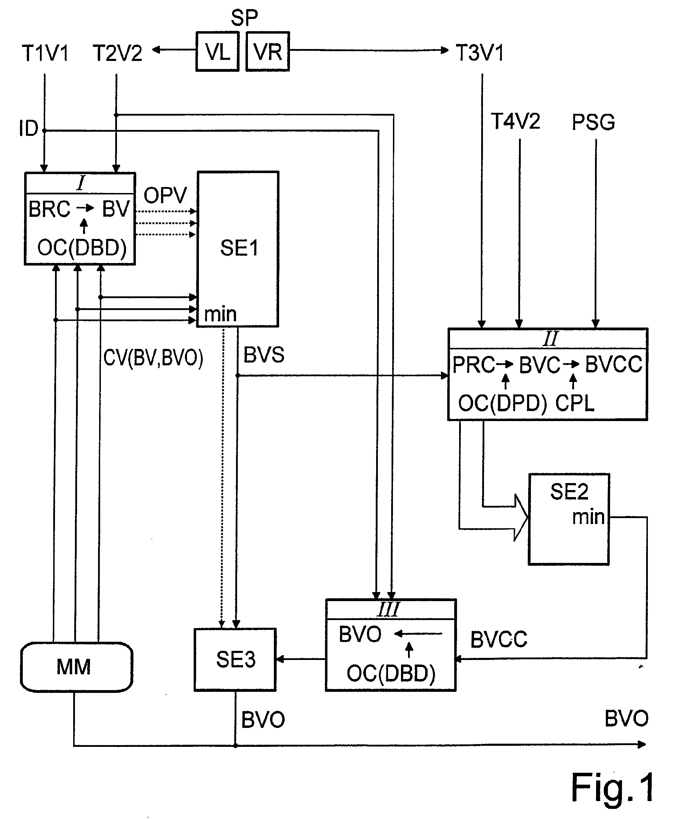

In der **Figur 1** ist das erfindungsgemäße Verfahren in seiner allgemeinen Form dargestellt, das der Ermittlung eines Feldes von optimierten Blockvektoren **BVO** als Maß für die auftretende Disparität dient. Das erfindungsgemäße Verfahren kann ohne zusätzliche Hardwarekomponenten rein rechnerisch durchgeführt und beispielsweise mit einem handelsüblichen Pentium-III-Prozessor mit 800 MHz und guter Qualität umgesetzt werden. Das Verfahren kann in drei Abschnitte untergliedert werden :

in einem ersten Abschnitt **I** werden drei Kandidatenvektoren **CV** aus vorangegangenen Rekursionsschritten für die aktuelle Blockposition durch rekursives Blockmatching ausgewertet. Als Eingangsbilddaten **ID** werden transformierte Videobilddaten **T1V1, T2V2** des linken und rechten Videobildes **V1, V2** eines Stereobildpaares **SP** verwendet. Nach einer Initialisierung mit Default-Werten werden aus einem Speicher **MM** die erforderlichen drei Kandidatenvektoren **CV** zur Verfügung gestellt. Die Berechnung des minimalen Zahlenwertes **OPV** erfolgt in der Blockrekursion **BRC** nach Vorgabe der Transformation der Videobilddaten **TV1, TV2** mit einem geeigneten Optimierungskriterium **OC.** Im dargestellten Verfahrensablauf handelt es sich hierbei um die Differenz verschobener Blöcke **DBD.** Der zu dem minimalen Zahlenwert **OPV** gehörige Kandidatenvektor **CV** wird in einer Auswahleinheit **SE1** ausgewählt und als Blockstartvektor **BVS** dem nächsten Abschnitt II zugeleitet.

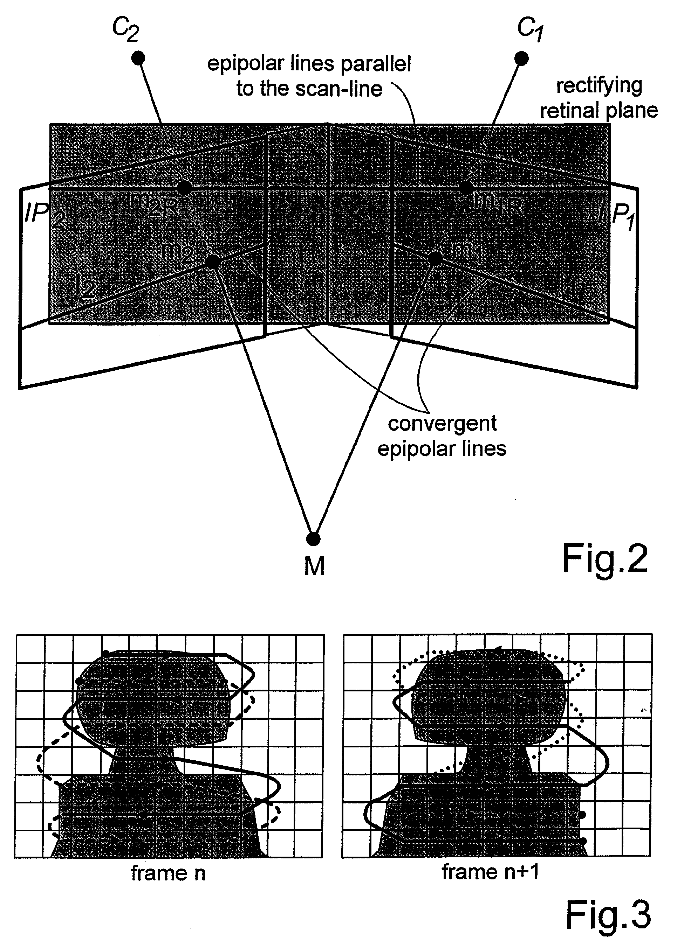

Im nächsten Abschnitt **II** wird eine Pixelrekursion **PRC** durchgeführt, die mit dem Blockstartvektor **BVS** beginnt. Ausgehend von dem aktuellen Stereobildpaar **SP** werden der Pixelrekursion **PRC** transformierte Videobilddaten **T3V1, T4V2** zugeführt. Außerdem fließen hier die Parameter der jeweiligen Stereogeometrie **PSG** in die Pixelrekursion **PRC** ein. Die Berechnung des korrigierten Blockvektors **BVC** erfolgt auf der Grundlage einer vereinfachten Berechnung des optischen Flusses, der sich aus dem örtlichen Gradienten und dem Gradienten zwischen den Stereobildern zusammensetzt. Die Differenz verschobener Pixel **DPD** wird bei der Bewertung des korrigierten Blockvektors **BVC** als Optimierungskriterium **OC** verwendet. Da der so berechnete Blockvektor **BVC** in der Regel nicht die Epipolarbedingung erfüllt, wird anschließend noch ein Clamping auf die Epipolarlinie **CPL** durchgeführt, um den dem korrigierten Blockvektor **BVC** am nächsten liegenden Blockvektor **BVCC** zu finden, der die Epipolarbedingung erfüllt. Vergleiche hierzu auch **Figur 2.** Die Pixelrekursion liefert eine Schar von solchermaßen doppelt korrigierten Blockvektoren **BVCC,** wobei der beste korrigierte Blockvektor **BVCC** dann in einer weiteren Auswahleinheit **SE2** nach Maßgabe der minimalen Differenz verschobener Pixel **DPD** ausgewählt und einem dritten Abschnitt **III** zugeführt wird.

Hier wird unter Anwendung des geeigneten Optimierungskriteriums der Optimierungswert für den korrigierten und auf die Epipolarlinie gezwungenen Blockvektor **BVCC** berechnet. Der optimale Blockvektor **BVO** wird schließlich in einer dritten Auswahleinheit **SE3** basierend auf dem Ergebnis aus Abschnitt III und der Selektionseinheit **SE1** aus dem Blockstartvektor **BVS** und dem korrigierten Blockvektor **BVCC** ausgewählt und sowohl dem Speicher **MM** zugeführt als auch zur Erstellung des Disparitätsvektorfeldes ausgegeben. Das Verfahren beginnt dann erneut mit dem nächsten aktuellen Pixel bzw. mit dem nächsten Stereobild, wenn alle Pixel im Objektbereich abgearbeitet sind.

In der **Figur 2** ist die Epipolargeometrie dargestellt, deren Parameter durch Erfüllung der Epipolarbedingung in die Pixelrekursion **PRK** eingehen. Ausgehend von einem räumlichen Punkt **M** und dessen beiden Projektionspunkten $m_1$ und $m_2$ in die beiden Bildebenen $I_1$ und $I_2$ einer Stereoanordnung besagt die Epipolar-Geometrie, dass ein optischer Strahl, der durch die Punkte $m_1$ und **M** geht, auf einer korrespondierenden Epipolarlinie $I_2$ in der Bildebene $IP_2$ abgebildet wird. Deshalb muss der Punkt $m_2$ auf der Epipolarlinie $I_2$ liegen, falls er in der zweiten Ansicht nicht verdeckt ist. Im umgekehrten Fall muss der Projektionspunkt $m_1$ auf der komplementären Epipolarlinie $I_1$ liegen. Diese Grundsatzbeziehung kommt in der bekannten Epipolargleichung **[I]** zum Ausdruck, in der **F** die Fundamentalmatrix bezeichnet (vergleiche **[6]**). Die Fundamentalmatrix enthält sowohl die Kameraparameter jeder Kamera des Stereosystems als auch die geometrische Beziehung zwischen beiden Kameras. Die in den Formeln verwendete Tilde über den Projektionspunkten $m_1$, $m_2$ zeigt an, dass deren Flächenkoordinaten (x, y) in den Raum erweitert wurden (x, y, 1). Damit ist es möglich, die zweidimensionalen Vektoren der Bildebene im projektiven dreidimensionalen Raum zu benutzen.

$$[I] \qquad \tilde{\mathbf{m}}_1^T \mathbf{F} \tilde{\mathbf{m}}_2 = 0$$

Deshalb kann die Anpassung der korrespondierenden Projektionspunkte $m_1$, $m_2$ immer auf eine eindimensionale Suche entlang den Epipolarlinien $I_1$, $I_2$ reduziert werden, die sich für jede der beiden Ansichten folgendermaßen berechnen **[II]:**

$$[II] \qquad \mathbf{l}_1 = \mathbf{F} \tilde{\mathbf{m}}_2 \quad \text{u}nd \quad \mathbf{l}_2 = \mathbf{F}^T \tilde{\mathbf{m}}_1$$

Geht man von einem allgemeinen Stereokameraaufbau mit stark konvergent ausgerichteten Kameras aus, kann diese eindimensionale Suche auf zwei unterschiedliche Weisen erfolgen (vergleiche **[7]**). Die erste Möglichkeit ist eine Einschritt-Lösung, bei der die eindimensionale Suche direkt entlang einer aufgrund der stark konvergenten Kameraausrichtung beliebig orientierten Epipolarlinie erfolgt. Die zweite Möglichkeit ist eine Zweischritt-Lösung, die zunächst jeweils eine virtuelle Rotation für beide Kameras vorsieht, bis eine parallele Stereogeometrie erreicht ist. Dieser Vorverarbeitungsschritt wird "Rektifikation" genannt und erzeugt im Allgemeinen trapezverzerrte Bilder mit horizontalen Epipolarlinien. Nunmehr können die korrespondierenden Punkte $m_{1R}$, $m_{2R}$ in den rektifizierten Bildern entlang horizontaler Epipolarlinien $I_R$ gesucht werden. Hierdurch kann die eindimensionale Suche zwar weiter vereinfacht werden, allerdings benötigt der Rektifizierungsprozess zusätzliche Rechenzeit. Die Rektifizierung erfordert die Ableitung von zwei Transformationsmatrizen T1 und T2 aus der Kamerageometrie, die ebenfalls im Stand der Technik hinlänglich beschrieben sind (vergleiche **[8]**). Die resultierenden Matrizen können dann zur Transformierung jedes Pixels der Originalbilder in die rektifizierte Ansicht genutzt werden [III]:

$$[III] \qquad \tilde{\mathbf{m}}_{1r} = \mathbf{T}_1 \cdot \tilde{\mathbf{m}}_1 \qquad \text{und} \qquad \tilde{\mathbf{m}}_{2r} = \mathbf{T}_2 \cdot \tilde{\mathbf{m}}_2$$

In der **Figur 3** ist eine mäanderförmige Abtastung der einzelnen Videobilder für eine richtungsunabhängige Bearbeitung der einzelnen Pixel vereinfacht dargestellt. Die Abtastung bezieht sich nur auf ein Videoobjekt mit beliebiger Kontur, wodurch die Rechenzeit verkürzt werden konnte. Auf der linken Seite werden nur die geraden Bildframes, auf der rechten nur die ungeraden abgetastet. Der erste Durchlauf für die geraden Bildframes ist durchgezogen gezeichnet, beginnt oben und umfasst nur die ungeraden Bildzeilen. Der zweite Durchlauf ist gestrichelt gezeichnet, umfasst die Abarbeitung der geraden Zeilen und läuft dem ersten Durchlauf mit einem unteren Startpunkt entgegen. Im folgenden Stereobildpaar sind die Abläufe und Startpunkte genau umgekehrt. Durch diesen dreifachen Mäander können die völlige Richtungsunabhängigkeit der Pixelbearbeitung und damit bestmögliche Ergebnisse in der Disparitätsanalyse zur Auswertung der Tiefenverhältnisse erzielt werden.

Die vorliegende Erfindung in der Grundidee und in ihren einzelnen bevorzugten Ausführungsformen ist Gegenstand einer geplanten Veröffentlichung der Erfinder (Peter Kauff, Nicole Brandenburg, Michael Karl, Oliver Schreer "Fast Hybrid Block-and Pixel-recursive Disparity Analysis or Real-Time Applications in Immersive Tele-Conference Scenarios" für "The 9-th International Conference in Central Europe on Computer Graphics, Visualization and Computer Vision 2001, February 5 - 9, 2001 at University of West Bohemia, Campus-Bory, Czech Republic).

**Veröffentlichungen**

**[1]** G. de Haan et al: "True-motion estimation with 3-D recursive block matching", IEEE Trans on Circuits, Systems and Video Technology 3, pp. 368-379,1993
**[2]** J. L. Barron, D. J. Fleet and S. S. Beauchemin: "Performance and Optical Flow Techniques", Int. Journal on Computer Vision, Vol. 12, No.1, 1994
**[3]** O.D. Faugeras et al: "Real-time Correlation-Based Stereo: Algorithm, Implementations and Applications", INRIA Research Report No. 2013, INRIA, Sophia-Antipolis, August 1993
**[4]** J.-R. Ohm et al: "A Real-Time Hardware System for Stereoscopic Videoconferencing with Viewpoint Adaptation", Image Communication, Special Issue on 3D-TV, January 1998
**[5]** L. Alvarez, R. Deriche, J. Sanchez and J. Weickert: "Dense Disparity Map Estimation Respecting Image Discontinuities: A PDE and Scale-Space Based Approach", INRIA Research Report No. 3874, INRIA, Sophia-Antipolis, January 2000
**[6]** Z. Zang, G. Xu : "Epipolar Geometry in Stereo, Motion and Object Recognition", Kluwer Academic Publisher, Netherlands, 1996
**[7]** O. Schreer et al. "A Comparative Study on Disparity Analysis based on Convergent and Rectified Views", British Machine Vision Conference 2000, Bristol, September 2000
**[8]** E. Fusiello, E. Trucco, A. Verri : "Rectification with Unconstrained Stereo Geometry", British Machine Vision Conference 1997, Essex, pp 400-409, September 1997

**Bezugszeichenliste**

| | |
|---|---|
| **BRC** | Blockrekursion |
| **BV** | Blockvektor |
| **BVCC** | auf die Epipolarlinie bezogener korrigierter Blockvektor |
| **BVC** | korrigierter Blockvektor |
| **BVO** | optimierter Blockvektor |
| **BVS** | Blockstartvektor |
| **CPL** | Clamping auf die Epipolarlinie |
| **CV** | Kandidatenvektor |
| **DBD** | Differenz verschobener Blöcke |
| **DPD** | Differenz verschobener Pixel |
| **F** | Fundamentalmatrix |
| **ID** | Eingangsbilddaten |
| **IP$_1$** | linke Bildebene |
| **IP$_2$** | rechte Bildebene |
| **l$_1$** | Epipolarlinie linke Bildebene |
| **l$_2$** | Epipolarlinie rechte Bildebene |
| **l$_R$** | horizontale Epipolarlinie, rektifiziert |
| **M** | räumlicher Punkt |
| **MM** | Speicher |
| **m$_1$** | Projektionspunkt linke Bildebene |
| **m$_2$** | Projektionspunkt rechte Bildebene |
| **m$_{1r}$** | rektifizierter Projektionspunkt linke Bildebene |
| **m$_{2r}$** | rektifizierter Projektionspunkt rechte Bildebene |
| **OC** | Optimierungskriterium |
| **OPV** | minimaler Zahlenwert |
| **PRC** | Pixelrekursion |

| PSG | Parameter Stereogeometrie |
|---|---|
| SE1 | erste Auswahleinheit |
| SE2 | zweite Auswahleinheit |
| SE3 | dritte Auswahleinheit |
| SP | Stereobildpaar |
| T | Transformierte |
| T1V1 | transformierte Videobilddaten linkes Videobild |
| T2V2 | transformierte Videobilddaten rechtes Videobild |
| T3V1 | transformierte Videobilddaten linkes Videobild |
| T4V2 | transformierte Videobilddaten rechtes Videobild |
| V1 | linkes Videobild |
| V2 | rechtes Videobild |

**Patentansprüche**

1. Verfahren zur Korrespondenzanalyse von Bildmerkmalen in korrespondierenden Videobildern in Echtzeit, das zur Bestimmung eines Korrespondenzvektorfeldes von den digitalen Eingangsbilddaten unter Einbeziehung ausgewählter Optimierungskriterien ausgeht und auf dem Hybridrekursionsverfahren basiert, das zur Ermittlung eines korrigierten Blockvektors als Korrespondenzvektor des jeweils aktuellen Pixels eine Blockrekursion mit einer integrierten Pixelrekursion zur Blockvektorkorrektur umfasst,
**dadurch gekennzeichnet, dass**
zur Ermittlung eines Disparitätsvektorfeldes als Korrespondenzvektorfeld die Eingangsbilddaten (ID) auf Basis der beiden Videobilder (V1, V2) eines Stereobildpaares (SP) generiert werden, das mittels eines Mehrkamerasystems mit beliebiger Stereogeometrie erzeugt wird, wobei die Bildmerkmale in den beiden Videobildern (V1, V2) des Stereobildpaares (SP) über eine Ortsverschiebung abhängig von der Tiefe des zugehörigen Bildmerkmals im Raum miteinander korrespondieren, und dass in die Blockvektorkorrektur die Parameter der Stereogeometrie (PSG) zur Erfüllung der Epipolarbedingung für eine Anbindung des korrigierten Blockvektors (BVC) an die jeweilige Epipolarlinie der Stereogeometrie einbezogen sind (CPL, BVCC).

2. Verfahren nach Anspruch 1,
**dadurch gekennzeichnet, dass**
die Eingangsbilddaten (ID) als transformierte Äquivalente (T1V1, T2V2) aus den beiden Videobildern (V1,V2) eines Stereobildpaares (SP) generiert werden.

3. Verfahren nach Anspruch 2,
**dadurch gekennzeichnet, dass**
die transformierten Äquivalente durch Rektifikation des Stereobildpaares generiert werden.

4. Verfahren nach einem der vorangehenden Ansprüche 1 bis 3,
**dadurch gekennzeichnet, dass**
in der Blockrekursion (BRC) und in der integrierten Pixelrekursion (PRC) unterschiedlich transformierte Äquivalente (T1V1 / T3V1, T2V2 / T4V2) eines Stereobildpaares (SP) als Eingangsbilddaten (ID) bearbeitet werden.

5. Verfahren nach einem der vorangehenden Ansprüche 1 bis 4,
**dadurch gekennzeichnet, dass**
in der Blockrekursion (BRC) als Optimierungkriterium (OC) die Differenz verschobener Blöcke (DBD) und in der Pixelrekursion (PRC) die Differenz verschobener Pixel (DPD) gewählt ist.

6. Verfahren nach einem der vorangehenden Ansprüche 1 bis 5,
**dadurch gekennzeichnet, dass**
die Ermittlung des Disparitätsvektors des jeweils aktuellen Pixels durch eine Parametrisierung der Epipolarlinien der Stereogeometrie auf einen eindimensionalen Suchraum beschränkt ist.

7. Verfahren nach einem der vorangehenden Ansprüche 1 bis 6,
**dadurch gekennzeichnet, dass**
die Disparitätsanalyse auf die begrenzte Pixelanzahl eines geschlossenen Videoobjekts beschränkt ist.

**8.** Verfahren nach einem der vorangehenden Ansprüche 1 bis 7,
**dadurch gekennzeichnet, dass**
die einzelnen Blöcke in der Blockrekursion richtungsunabhängig bearbeitet werden.

**9.** Verfahren nach Anspruch 8,
**dadurch gekennzeichnet, dass**
die Blöcke zuerst für alle ungeraden oder geraden Bildzeilen bearbeitet werden und in aufeinander folgenden Bildzeilen die Bearbeitungsrichtung wechselt und in aufeinander folgenden Stereobildpaaren die Blockrekursion abwechselnd in der obersten oder untersten Bildzeile startet.

**10.** Verfahren nach einem der vorangehenden Ansprüche 1 bis 7,
**dadurch gekennzeichnet, dass**
eine rein horizontale oder rein vertikale Verarbeitung erfolgt.

Fig.1

Fig.2

frame n

frame n+1

Fig.3